# EUROPEAN PATENT APPLICATION

(11) **EP 4 099 151 A1**
(43) Date of publication of application: **07.12.2022**
(21) Application number: 22154206.1
(22) Date of filing: 31.01.2022
(51) Int. Cl.: G06F 8/35, G06F 8/10, G06N 20/00, G05B 19/418

(54) **A METHOD FOR AMENDING OR ADDING MACHINE LEARNING CAPABILITIES TO AN AUTOMATION DEVICE**

(30) Priority: 31.05.2021 EP 21176980
(71) Applicant: Siemens Aktiengesellschaft, 80333 München (DE)
(72) Inventor: Anicic, Darko, 81379 München (DE); Ren, Haoyu, 81549 München (DE); Runkler, Thomas, 81929 München (DE)

(57) **Abstract**

Embodiments as described herein provide a semantic model built to represent Neural Networks by a machine-interpretable model, enabling semantic discovery of a neural network for a particular task. According to embodiments, machine learning functions including neural network models are provided without requiring specific engineering or extensive customization of the automation devices. These embodiments enable an open and interoperable ecosystem, in which field and edge applications may be realized with neural networks and easily deployed on heterogenous field and edge devices.

## Description

### TECHNICAL FIELD

The disclosed embodiments relate to a method for amending or adding machine learning capabilities to an automation device.

### BACKGROUND

A system of physical objects that can be discovered, monitored, controlled or interacted with over various networking interfaces is commonly referred to as Internet of Things (IoT). In the industrial domain, specifically in the field of automation facilities, IoT techniques are believed to launch a revolutionary concept which is frequently referred to as Industry 4.0.

Automation facilities may provide enhanced or new utilisation opportunities provided that the equipment resources support straightforward possibilities for creation, discovery and deployment of modular software.

Automation facilities usually include one or more devices - particularly embedded devices - in an industrial domain. Such embedded devices are configured to execute software which continuously gathers data on the state of input devices in order to control the state of output devices. An embedded device typically includes a processor including volatile memory, non-volatile memory comprising an application program, and input/output ports for connecting to other devices or automation facilities. Hereinafter, automation facilities and parts of automation facilities are referred to as automation devices or devices in the automation systems domain.

Due to the near ubiquitous proliferation of field and edge devices, a large amount of data is generated in real time to support decision making in automation systems.

While data is traditionally sent to the cloud and processed centrally, this practice may saturate bandwidth and cause high communication costs as the IoT network expands. As microcontrollers (MCUs) become less expensive and more powerful, edge computing emerges as an opportunity to complement cloud computing, allowing to collect various data from distributed sensors, process the acquired information on constrained devices locally, and take corresponding actions timely. Keeping the data mainly in field and edge devices may retain data privacy without letting sensitive data leave devices, reduce communication traffic, guarantee low latency, and decrease power consumption.

Advances in machine Learning and neural network solutions are opening up new possibilities for mining data with artificial intelligence or AI. Advanced algorithms, broad datasets and various frameworks, including open-source machine learning software libraries for a range of tasks, allow for tackling new use cases in the industrial automation domain.

Further advances of machine learning in industrial environments, however, are slowed down by a variety and diversity of automation devices. Since almost each automation device may be tailored for a specific computational task, each automation device usually provides different hardware, firmware, programs and capabilities. The proliferation and the diversity of automation devices and software pose a challenge in deploying machine learning applications and/or neural networks models. Further on, neural networks may vary in complexity and applicability to a specific device and domain.

Accordingly, there is a need in the art for neural networks being modeled by a description language and being deployable and executable in an automated manner on an embedded automation device.

Further on, there is a need in the art in the art for automatically checking whether hardware characteristics and computation capabilities of a device may meet requirements of the specifical neural network model or, more generally, of a machine learning model.

Further on, there is a need in the art for machine learning models supporting straightforward possibilities for creation, discovery and deployment. For example, a machine learning model for improving a pattern recognition operation may need to be identified and discovered based on its properties, including its capabilities, or its service location, i.e. the location of an automation device sharing and offering the machine learning capabilities for improving the pattern recognition operation.

### SUMMARY AND DESCRIPTION

The present invention relates to a method for amending or adding functionality to an automation device in an automation systems domain, the method including the steps of:
1) providing a capability model of the automation device, the capability model semantically representing device capabilities of the automation device;
2) providing at least one machine learning model for semantically representing one or more machine learning functionalities and including at least one semantic model of a neural network;
3) deploying the machine learning model within the automation device;
4) interpreting a semantic part of the machine learning model by a semantic reasoner and matching requirements of the machine learning model with device capabilities inferred by the capability model; and;
5) executing the machine learning functionalities on the automation device.

According to an embodiment, a method for amending or adding machine learning capabilities to an automation device in an automation system is provided. The method may include a provision of a capability model of the automation device and east one machine learning model for semantically representing one or more machine learning functionalities and including at least one semantic model of a neural network.

According to an embodiment, the machine learning model may be deployed within the automation device. The machine learning model may be directly or indirectly deployed. Indirectly deployed may include a preceding step of uploading the machine learning model to a semantic repository of the automation system which may be followed by a step of downloading or transferring the machine learning model to the automation device.

According to an embodiment, the capability model may be directly or indirectly deployed in analogy to the procedure previously described for the deployment of the machine learning model.

According to an embodiment, a semantic part of the machine learning model may be interpreted by a semantic reasoner. After this interpretation, matching requirements of the machine learning model may be matched with device capabilities inferred by the capability model.

According to an embodiment, the machine learning functionalities may be executed on the automation device. The semantic machine learning model for semantically representing the machine learning operations may not only be interpretable but may also be executable. The semantic approach enables a formal representation capable of a machine-based discovery of the functionality and, at the same time, a machine interpretation and execution by the device itself.

According to an embodiment, a semantic representation of the machine learning model may be provided as a basis for representing the machine learning functionality, e.g., on the basis or with participation of one or more neural networks, to be amended or added.

According to embodiments, the machine interpretation and execution may be carried out by a semantic reasoner and an event processing engine, respectively, which may be both part of a runtime environment implemented on the device.

According to an embodiment, automation devices or functions and services executed on automation devices or on other locations in the automation system may be semantically described in such a way that services, machines or other automation devices are able to understand and interpret semantic descriptions in order to autonomously allocate appropriate automation resources.

Further embodiments are set out in dependent claims.

According to an embodiment, the capability model is at least partially amended or updated by contents of the machine learning model. Since the capability model reflects the properties and capabilities of the automation device, an update of the capability model is advantageous at least in cases where the capabilities of the device have been expanded to include a machine learning function.

According to an embodiment, the machine learning model is used for discovery of a neural network model. A semantic discovery of the functionality of neural networks is one of the major benefits of replacing a neural network embodied in a special hardware by a semantic description. Variables, in particular weights, which had usually remained in the hardware of the neural network during the process of a training or self-learning are now, using the embodiment, rendered fully transparent and discoverable.

According to an embodiment, at least one of the capability model and the machine learning model are uploaded to a semantic repository of the automation system. This semantic repository of the automation system is central or decentral instance in the automation system capable of aiding a discovery of semantic models and their possible applications and for orchestrating and instantiating complex applications amongst the automation devices.

According to an embodiment, the semantic repository includes a knowledge graph being a central or decentral data base for hosting knowledge artefacts. The term »artifact« as used herein is defined to be a semantically described segment of a model wherein the model may be used to contribute to a composed application distributed over a network. Examples of artifacts include knowledge artefacts known as digital twins, standardized semantic models, etc.

According to an embodiment, a matchmaking of the capability model and the machine learning model is performed in order to semantically match capabilities of the automation device with functional requirements of the automation system. A semantic matchmaking allows reconciling functionality requirements imposed by an orchestration service with capabilities of the device.

According to an embodiment, the provision of the machine learning model is preceded by a semantic based discovery of relevant resources offered by a one or more automation devices.

According to an embodiment, the semantic model of the neural network is defined as a neural network class related to algorithms, the neural network class including at least one semantic specification of one or more hidden or unhidden layers of a neural network. According to a further embodiment, at least one of said layers of the neural network class is assigned to an interface class or subclass being capable of interfacing classes or subclasses of other semantic models.

According to an embodiment, the semantic model of the neural network includes a multiplicity of weighted datasets related to a neuron, wherein at least one of said weighted datasets is assigned to a weight variable. The weight variable or model weight may be organized in a separate neural network model repository and/or may be retrieved via a URL (Uniform Resource Locator).

### BRIEF DESCRIPTION OF THE DRAWING

The objects as well as further advantages of the present embodiments will become more apparent and readily appreciated from the following description of the preferred embodiments, taken in conjunction with the accompanying drawing accompanying drawing of which:
- FIG. 1: shows a block diagram of an exemplary system according to the embodiments for enabling a deployment of machine learning applications on an automated device;
- FIG. 2: shows a block diagram of an exemplary framework for a semantic management of on-device applications;
- FIG. 3: shows a block diagram of a semantic schema of a neural network according to an embodiment;
- FIG. 4: shows a block diagram of a possible use case of condition monitoring according to an embodiment; and;
- FIG. 5: shows a block diagram of an exemplary neural network for conveyor belt monitoring.

### DETAILED DESCRIPTION

Neural networks may need to be easily discovered, configured, and deployed in the field and edge applications. Accordingly, there is a need in the art for providing meta-data for developed neural networks, describing their applicability and characteristics.

This meta-data might be advantageously realized with standardized semantic models and provided in dedicated knowledge graphs in order to be easily used across different architecture layers (cloud, edge, and field) and enable expansion of an open and interoperable IoT ecosystem.

At present, however, automation functions on automation devices are usually provided in the form of embedded software, e.g., C/C++ code. Engineering tools are usually applied for design, implementation, and configuration of a complete automation system, which typically includes the automation devise.

Going beyond the limits of current practices, the embodiments strive to implement machine learning functions including neural network models without requiring specific engineering or extensive customization of the automation devices.

Embodiments as described herein enable an open and interoperable IIoT ecosystem, in which field and edge applications may be realized with neural networks and easily deployed on heterogenous field and edge devices.

Embodiments as described herein provide a semantic model built to represent Neural Networks by a machine-interpretable model which enables:
- Semantic discovery of a neural network for a particular task
- Automated proving whether hardware characteristics and computation capabilities of an automation device meet requirements of a neural network.
- Validated configuration and deployment of a neural network in the field or edge device.
- Meta-data of a Neural Network, describing its applicability, requirements, and characteristics.
- Integration with other knowledge artifacts (digital tweens, standardized semantic models etc.) in a Knowledge Graph, which enables a transparent and interoperable IIoT ecosystem.

According to an exemplary use case, edge computing is to be used to monitor a conveyor belt in a factory, where IoT devices need to be installed to monitor operational processes and notify workers when anomalies or irregularities are detected.

An IoT device embedded within an accelerometer may be placed on the conveyor belt in order to analyze anomaly patterns in vibration data. Another IoT device connected with a camera may be deployed to detect a presence of working personnel and sending an alarm to a remote center if no personnel is detected on-site. Such use case could be implemented by installing several Neural Network models on the devices, enabling processing and decision-making at the field or at the edge.

However, there might be dozens of conveyor belts and many other machines in a factory, where various field devices and tailored artifacts are needed to tackle different problems. As the IoT network begins to spread, it quickly becomes cumbersome to discover the capabilities and coordinate the offerings across all the field devices and on-device applications. An easy management system would support an effective discovery of neural network models in this case. Also, the requirements imposed by discovered models and rules may be matched against the capabilities of IoT devices so that new applications may be orchestrated easily. Besides, the IoT solution should be manageable even if devices are from different vendors, artifacts have diverse functionalities, and the size of the IoT network scales.

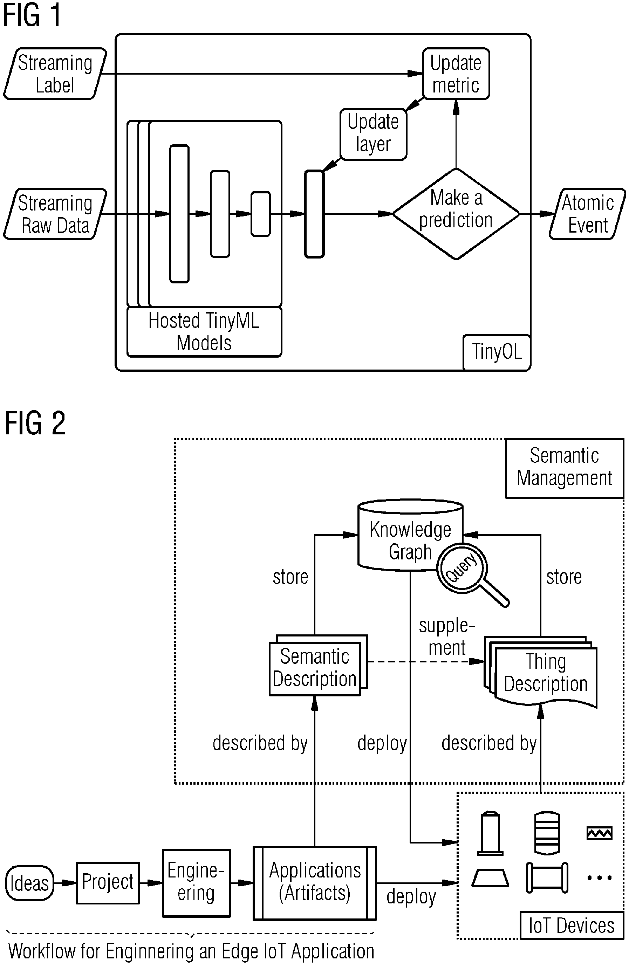

FIG. 1 shows a block diagram of an exemplary system according to the embodiments for enabling a deployment of machine learning applications on an automation device. An Automation Device AD comprises an instantiated, i.e., executed, machine learning model MLM which, as shown, consists of three layers. Streaming Raw Data SRD is fed from the outside via a - not shown - interface of the automation device AD to an input layer of the machine learning model MLM. A trainable layer TLY is connected with an output of the third layer of the machine learning model MLM.

The basic functionality depicted in Fig. 1 illustrates a concept of incremental online learning, enabling on-chip post-training to fine tune a machine learning model towards its specific working condition. As streaming data SDR flows in, the neural network modeled by the machine learning model MLM may run inference and update particular layers in the neural network by learning the data one at a time. For each incoming sample, the system first makes a prediction PRD. One outcome of this prediction PRD may be an atomic event ATE, for example, an answer (yes/no) to the question of whether an image information input via the streaming raw data SRD contains a pattern to be recognized. Subsequently, if a label is provided, the weights of the trainable layers in the model are updated by an update metric UPM using an online gradient descent fed back by an update layer UPL. Since prediction and training are interleaved, the data may be discarded after each round.

The disclosed embodiments extend the afore described basic implementation to semantically manage NN-based (Neural Networks) applications across IoT networks. However, the embodiments are not restricted to the management of NN-based applications, as the concept is adaptable and may be extended to other on-device applications too. This section overviews the architecture of a framework for semantic management of on-device applications.

FIG. 2. illustrates a possible system architecture. As only indicated schematically at the bottom of FIG. 2, a traditional workflow WFL for engineering a field IoT application may start with ideas, followed by defining a project, implementation, ending with a deployment DPL of the application in one or more automation devices ADV or other machines, sensors, etc. in an automation system.

The framework proposed by the embodiments is built on top of the toolchain to supplement a semantic management SMM.

This framework may include three building blocks:
- A capability model TDS or a »thing description« of one or more automation devices ADV used to semantically represent or describe DSC the device capabilities of the automation device ADV. Preferably, a W3C Thing Description may be used for implementing the capability model TDS.
- A machine learning model SMD or a semantic description for semantically representing one or more machine learning functionalities is including at least one semantic model of a neural network. The semantic descriptions model on-device applications and enrich the capability model TDS with artifacts knowledge. The machine learning model SMD may also be seen as an artefact described DSC by the traditional workflow WFL.
- A semantic repository KGR or a knowledge graph along with an infrastructure for for hosting, querying, and managing semantic information.

The framework proposed by the embodiments may be applied at different architecture levels. Preferably, the framework may be applied on an edge level as described further down below. The embodiments are not limited to W3C Thing Description. Other standards for describing devices or automation devices ADV may be used in the alternative.

As symbolized by different shapes at the bottom part of FIG. 2, heterogeneous field devices and/or automation devices ADV in an automation system may be designed to serve different tasks within specific environments. They are different in terms of hardware, e.g., different sensors and computational capabilities such as CPU, RAM, and flash memory.

In terms of software, various programs are running inside automation devices ADV, and different vendors even have different application stacks. Most devices are bare-metal, as they are designed to live long with low power consumption and limited resources. The diversity of IoT components pose a barrier to interoperability and re-usability. Edge computing brings many devices together to open the door to advancements, yet the management of disparate components over production life-cycle is challenging.

A Thing Description according to the W3C standard aims to mitigate interoperability issues of heterogeneous automation devices ADV, bringing a variety of heterogeneous automation devices ADV under one information model. As depicted on the right side of the figure, capability model TDS or »thing description« describes the metadata and interactions of automation devices ADV, preferably in an RDF format and using a standardized ontology. A Thing Description offers the possibility to add context knowledge from additional semantic models. For this purpose, models such as SAREF ontology or many others may be used.

In addition to the standard way of extending a Thing Description with context knowledge, the Thing Description used by the embodiments as capability model TDS is complemented with semantic descriptions of artifacts according to the embodiments.

Further, on machine learning models SMD for general on-device applications - including machine learning applications - are shown on the left side of FIG. 2. A semantic description for each deployed application is created against their semantic schemes. This allows users to express and store comprehensive information of distinct artifact instances, increasing interoperability and reducing heterogeneity. Machine learning models may be used as artifacts.

A repository including a knowledge graph KGR as shown at the top of the figure, may be hosted remotely and may be used to register and discover appropriate semantic information. The repository offers a good approach for capturing interconnections among devices and artifacts and extending existing knowledge with a new one.

The knowledge graph KGR eases an organization of IoT components and automation devices ADV at scale. One may query semantic information of existing automation devices ADV and artifacts in the field. More importantly, the artifacts may be reused and orchestrated to build new features based on the retrieved semantic information, saving cost and avoiding reinventing the wheels.

In the following, a semantic model for describing Neural Networks is described. As the heterogeneity of edge devices and the complexity of the environment bring significant variations of on-device applications, it is not easy to have a clear overview of individual artifacts distributed over the network, such as their metadata, program structures, and computational logic, limiting the possibility of interpreting and reusing existing functionalities.

The W3C Thing Description itself is not able to answer all these questions because W3C Thing Description is designed to cooperate information exchange, not to describe how the information is processed in the background.

Accordingly, the embodiments supplement a W3C Thing Description format with semantic modeling of on-device applications, particularly machine learning functions. Accrodngly, existing semantic schemas and ontologies may be resued in order to construct semantic models of artifacts and corresponding namespaces and prefixes as shown in a following code example below.

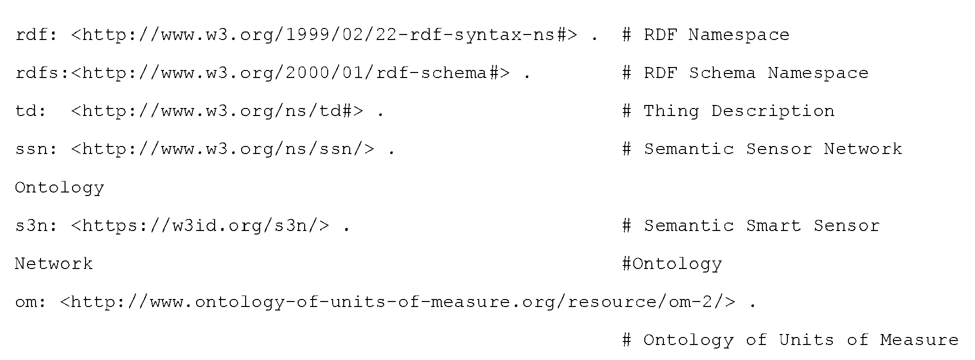

A semantic schema designed for neural netword models may be used with a namespace and abbreviation defined as follows:

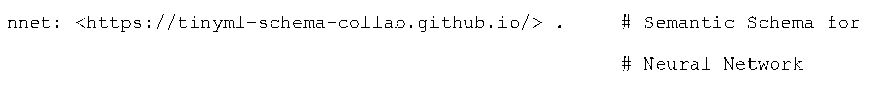

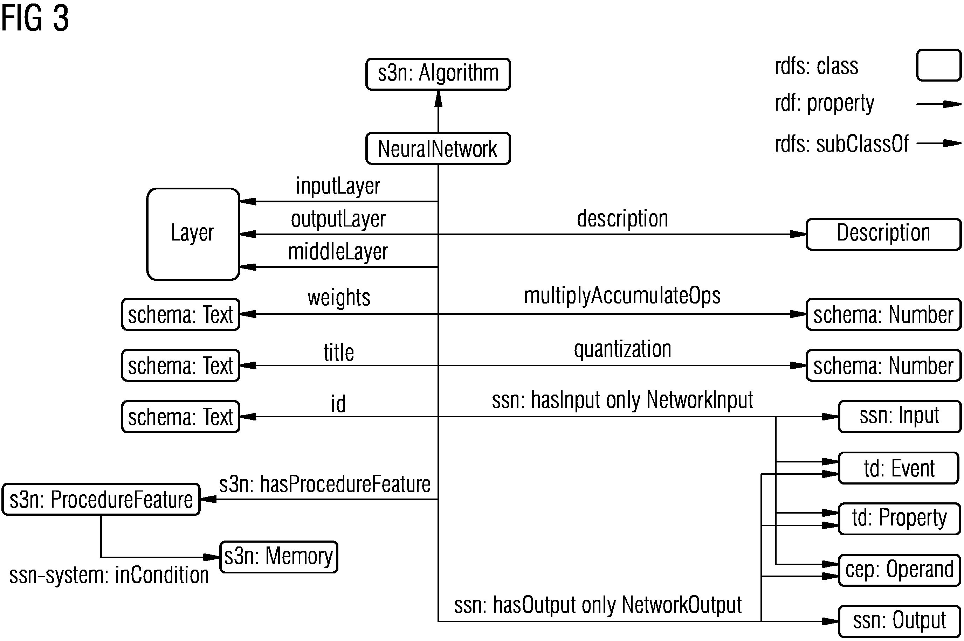

The semantic schema for neural network models is depicted in FIG. 3. The neural network is a subclass of "s3n:Algorithm" with a »description« explaining the primary usage and functionalities of the model.

According to an exemplary neural network consisting of layers, some layers in a neural network may be divided into three categories: input layer, middle layer (hidden layer), and output layer. The »input layer« may be the first layer of a neural network and may be responsible for receiving raw »input« data. A »middle layer« may be a layer performing a predefined transformation on incoming data from the previous layer and sending result of this transformation to a next layer. The »output layer« may be the last layer in a neural network and may be responsible for the »output« of the inference result.

The »input« and the »output« of a neural network may be advantageously described as subclasses of other semantic standards in order to guarantee consistency and compatibility. Most layers may be composed of many interconnected neurons that operate with weights and/or may be assigned to a weight variable. Neurons use assigned weights to participate in mathematical operations. In terms of microcontrollers, an on-device neural network model may have one or more of the following properties:
- Quantization, which may be applied to convert weights from floats to integers, thereby accelerating the neural network inference;
- A required memory space for the model;
- A number of multiply-accumulate operations, which may be used to estimate inference latency and other indicators.

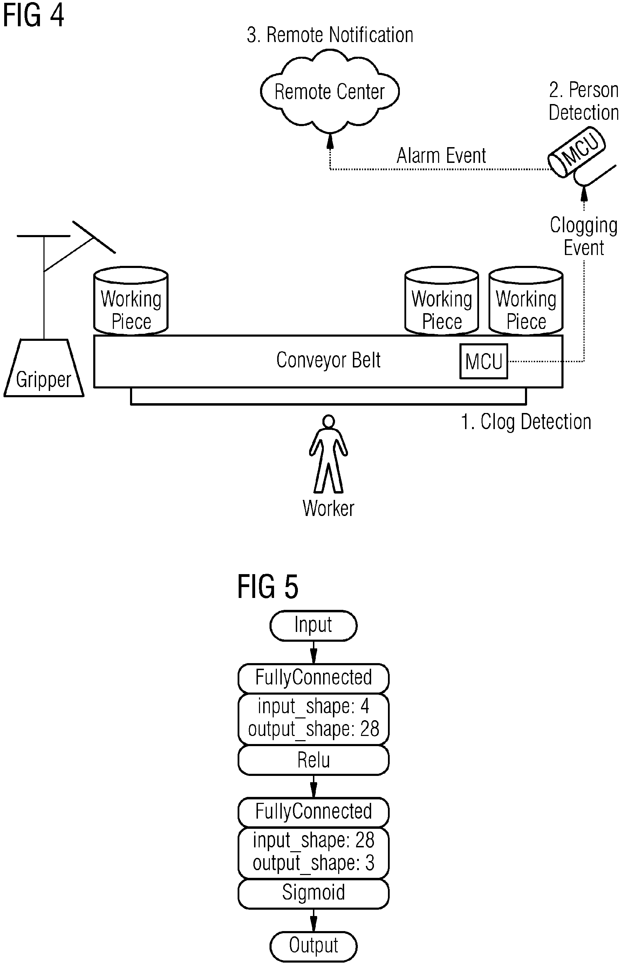

In order to describe a possible use of the proposed machine learning model for semantically representing a neural network, an exemplary use case is considered which is related to a condition monitoring under a simplified setting. FIG. 4 shows a view of a workstation with a worker SRK working therein. The workstation includes a conveyor belt CVB which is set up for moving workpieces WCS. On the left side, a vacuum gripper GRP keeps lifting workpieces WCS from a - not shown - preceding workstation putting these workpieces WCS on the conveyor belt CVB.

The workpieces WCS transports the workpiece WCS from the left to the right side to a subsequent work step. However, sometimes it may happen that the conveyor belt may get clogged. In this situation the workpiece WCS cannot be moved off from the conveyor belt CVB in time. This may happen due to various reasons: For example, the vacuum gripper GRP and the conveyor belt CVB may not be synchronized in term of a serving workload or due to a malfunction of the following process.

In this situation an IoT solution use case may be implemented to monitor the state of the conveyor belt CVB and take action once the belt starts clogging. A possible solution is described in the following.

First, an automation device ADV-1 for sensing vibrations is provided below the conveyor belt CVB. A machine learning model SMD including at least one semantic model of a neural network is deployed model in the automation device ADV-1. Based on vibration data sensed by the automation device ADV itself or provided by a sensor, the machine learning functionality executed on the automation device ADV-1 may classify three different conveyor belt states: off, on-normal, and on-clogging.

Second, a second automation device ADV-2, e.g., a camera is provided to detect a presence of the worker WRK in vicinity of the workstation. For this purpose, a machine learning model including a convolutional neural network is deployed on the automation device ADV-2. The convolutional neural network, when executed according to the machine learning model including the convolutional neural network, may outputs two inference results: worker-detected and worker-not-detected. If the conveyor belt CVB is clogging and no worker is detected on-site, a warning will be triggered to a remote center RC located inside a network NW instituted by the - not shown - automation system.

Third, a third automation device RC may be implemented for reasoning about incoming events and trigger an alarm event. The remote center RC may notify a responsible manager once an alarm is received.

For the sake of simplicity of this exemplary use case, only the first two inferences mentioned above are described further down below.

In the following a machine learning model SMD including a neural network model used for the vibration monitoring of the conveyor belt CVB is illustrated. The machine learning model SMD for the vibration monitoring may be modeled based on the semantic schema for Neural Network as depicted in FIG. 3.

A possible structure of the neural network is shown in FIG. 5. This neural network has four layers with two fully connected layers and two activation layers. The input layer consists of four neurons. In the use case, the neural network input is a four-dimensional processing result of a FFT algorithm (Fast Fourier Transform) on three axes of vibration data. The second fully connected layer outputs three-dimensional data which is transferred to the last output layer, namely the sigmoid layer.

Three dimensions refer to three different conveyor belt states: off, on-normal operation, and on-clogging, respectively. Preprocessing and postprocessing steps are treated as parts of the neural network block. Accordingly, the input of the neural network block is a three-dimensional vibration data.

The final output is an integer representing the state of the conveyor belt, where zero is off, one means on-normal, and two is on-clogging. The weights in the model are quantized to 16-bit floats. The model requires at least 20 kB of RAM, and each feed-forward inference needs about 252 multiply-accumulate operations. The model weights are saved separately in a neural network model repository and may be retrieved via a URL (Uniform Resource Locator).

In the following, a machine learning model, or particularly, a semantic representation of this neural network entitled ClogNet is shown. The machine learning model of this exemplary neural network as shown below is defined in an RDF Turtle format. This semantic representation may be automatically generated by parsing the entire neural network. For the sake of simplicity, only information relevant to the described embodiment is shown.

```
:ClogNet_1
  rdf:type nnet:NeuralNetwork ;
  nnet:id "nnet-322-000-000-001" ;
  nnet:inputLayer :InputLayer_1 ;
  nnet:middleLayer :MiddleLayer_1 ;
  nnet:middleLayer :MiddleLayer_2 ;
  nnet:outputLayer :OutputLayer_1 ;
  <http://w3id.org/s3n/hasProcedureFeature> :ProcedureFeature_1 ;
  nnet:quantization nnet:Float16 ;
  nnet:muliplyAccumulateOperations "252" ;
  nnet:weights "http://model-repo/nnet-322-000-000-001" ;
  rdfs:comment "Neural network for detecting clogging on a conveyor belt." ;
  rdfs:label "ClogNet_1" ;
  ssn:hasInput :ThreeAxesVibrationInput ;
  ssn:hasOutput :ConveyorBeltState ;
  .
   :InputLayer_1
  rdf:type nnet:Layer ;
  nnet:shapeIn "4" ;
  nnet:shapeOut "28" ;
  nnet:trainable schema:False ;
  nnet:typeOfLayer nnet:FullyConnected ;
  rdfs:label "InputLayer_1" ;
   :MiddleLayer_1
  rdf:type nnet:Layer ;
  nnet:index "1" ;
  nnet:trainable schema:False ;
  nnet:typeOfLayer nnet:Relu ;
  rdfs:label "MiddleLayer_1" ;
  .
   :MiddleLayer_2
  rdf:type nnet:Layer ;
  nnet:index "2" ;
  nnet:shapeIn "28" ;
  nnet:shapeOut "3" ;
  nnet:trainable schema:True ;
  nnet:typeOfLayer nnet:FullyConnected ;
  rdfs:label "MiddleLayer_1" ;
  .
   :OutputLayer_1
  rdf:type nnet:Layer ;
  nnet:trainable schema:False ;
  nnet:typeOfLayer nnet:Logistic ;
  rdfs:label "OutputLayer_1" ;
  .
   :ProcedureFeature_1
  rdf:type <http://w3id.org/s3n/ProcedureFeature> ;
  rdfs:label "ProcedureFeature_1" ;
  ssn-system:inCondition :Condition_1 ;
  .
   :Condition_1
  rdf:type s3n:Memory ;
  schema:minValue "20" ;
  schema:unitCode "om:kilobyte" ;
  rdfs:label "RAM requirement." ;
  .
```

One may notice that the model is rich. It provides a multiplicity of options for defining details of a neural network. For example, the second middle layer in the semantic description has value »true« in the attribute »trainable«, which implies that some weights in the neural network may be updated.

In the following, capability models TDS are provided. A W3C Thing Description may be used to semantically describe automation devices ADV for executing the desired Neural Network model. Two examples of capability model TDS are described respectively for the first automation device ADV-1 and for the second automation device ADV-2 used in the industrial use case as illustrated in FIG. 4.

The first automation devices ADV-1 is assumed to be equipped with 320KB SRAM, 1MB flash, and is assumed to be powered by a Cortex-M4 CPU running at 90 MHz. An embedded 3-axis accelerometer is assumed to be used by the first automation devices ADV-1. A neural network for detecting the state of the conveyor belt is assumed to be deployed on board of the first automation devices ADV-1. The artifacts interfaces are assumed to be described under "s3n:Algorithm". The required memory for the execution of each artifact is assumed to be provided. The estimated available RAM at run time is assumed to be 54 kB. A capability model TDS for the first automation devices ADV-1 containing the information above is given below. For the sake of simplicity and space, only important parts (i.e., essential interfaces and components) of the capability model TDS are shown.

```
{
 "@context": [
  "https://www.w3.org/2019/wot/td/v1",
   { "sosa": "http://www.w3.org/ns/sosa/",
    "ssn": "http://www.w3.org/ns/ssn/",
    "ssn-system": "http://www.w3.org/ns/ssn/systems",
    "s3n": "http://w3id.org/s3n/",
    "om": "http://www.ontology-of-units-of-measure.org/resource/om-2/",
    "schema": "http://schema.org/",
    "rdfs": "http://www.w3.org/2000/01/rdf-schema#",
    "demo": "http://ureasoner.org/festo-demo#",
    "@language": "en"
   }
 ],
 "@type": ["s3n:SmartSensor"],
 "title": "SSI-Web_1",
 "description": "SIEMENS SSI-Web Node",
 "ssn:hasSubSystem": [
   { "@type": "s3n:MicroController",
    "rdfs:comment": "MicroController in SIEMENS SSI-Web Node.",
    "s3n:hasSystemCapability": [
      { "ssn-system:hasSystemProperty": {
         "@type": "s3n:Memory",
         "schema:value": "54",
         "schema:unitCode": "om:kilobyte"
       }
      }
    ],
    "ssn:implements": [
      { "@type": "s3n:Algorithm",
       "rdfs:comment": "Neural network for detecting anomaly on a conveyor
       belt.",
       "s3n:hasProcedureFeature": {
         "ssn-system:inCondition": {
          "@type": "s3n:Memory",
          "rdfs:comment": "RAM requirement.",
          "schema:minValue": "20",
          "schema:unitCode": "om:kilobyte"
         }
       }
      }
    ]
   },
   { "@type": "demo:VibrationSensor" },
 ],{ "@type": "demo:TemperatureSensor" }
 "ssn:isHostedBy": "demo:FESTO_Workstatlon",
 "securityDefinitions": { "nosec_sc": { "scheme": "nosec"} },
 "security": "nosec_sc",
 "properties": {
  "ConveyorBeltState": {
    "title": "ConveyorBeltState",
    "observable": true,
    "readOnly": true,
    "description": "State of the conveyor belt on FESTO workstation based on a
    vibration sensor.",
    "type": "integer",
    "forms": [
      { "op": ["readproperty", "observeproperty"],
       "href": "http://ureasoner.org/festo-demo/conveyor-belt-state"
      }
    ]
   }
 },
 "actions": {},
 "events": {},
 "id": "SSI_Web:198:023:042:021",
 "forms": []
 }
```

The second automation devices ADV-2 is assumed to be equipped with 256KB of SRAM, 1MB of Flash. It is assumed to be driven by a Cortex-M4 CPU running at 64MHz with a computing power similar to the first automation device ADV-1. An external image sensor is assumed to be connected to the board of the second automation devices ADV-2. Further on, a neural network for detecting on-site workers is assumed to be provided. Memory requirements for the execution of artifacts are assumed to be provided. The estimated available RAM at run time is assumed to be 89 kB. A capability model TDS for the first automation devices ADV-1 containing the information above is given below.

```
 {
 "@context": [
 ],
 "@type": ["s3n:SmartSensor"],
 "title": "Arduino_Sense_BLE",
 "description": "Arduino Nano Sense BLE 33,
 "ssn:hasSubSystem": [
   { "@type": "s3n:MicroController",
    "rdfs:comment": "MicroController in Arduino Nano Sense BLE 33.",
    "s3n:hasSystemCapability": [
      { "ssn-system:hasSystemProperty": {
         "@type": "s3n:Memory",
         "schema:value": "89",
         "schema:unitCode": "om:kilobyte"
       }
      }
    ],
    "ssn:implements": [
      { "@type": "s3n:Algorithm",
       "rdfs:comment": "Neural network for detecting presence of worker.",
       "s3n:hasProcedureFeature": {
         "ssn-system:inCondition": {
          "@type": "s3n:Memory",
          "rdfs:comment": "RAM requirement.",
          "schema:minValue": "80",
          "schema:unitCode": "om:kilobyte"
         }
       }
      },
     { "@type": "s3n:Algorithm",
       "rdfs:comment": "Complex event processing for generating Alarm Event
       against rule.",
       "s3n:hasProcedureFeature": {
         "ssn-system:inCondition": {
          "@type": "s3n:Memory",
          "rdfs:comment": "RAM requirement.",
          "schema:minValue": "40",
          "schema:unitCode": "om:kilobyte"
         }
       }
      }
    ]
   },
   { "@type": "demo:ImagerSensor" },
   { "@type": "demo:VibrationSensor" },
 ],{ "@type": "demo:TemperatureSensor" }
 "ssn:isHostedBy": "demo:FESTO_Workstatlon",
 "securityDefinitions": { "nosec_sc": { "scheme": "nosec" } },
 "security": "nosec_sc",
 "properties": {
  "WorkerPresenceState": {
    "title": "WorkerPresenceState",
    "observable": true,
    "readOnly": true,
    "description": "Result of on-site worker detection based on an imager
    sensor.",
    "type": "boolean",
    "forms": [{ "op": ["readproperty", observeproperty],
           "herf": "http://ureasoner.org/festo-demo/workerPresence"
           } ]
   }
 },
 "actions": {},
 "events": { "CloggingAlarm": { "type": "string",
               "description": "The alarm event generated upon matching of
               CEP reasoning rule.",
               "forms": [{ "href":
                        "http://ureasoner.org/festo-demo/alarm",
                        "contentType": "string",
                        "subprotocol": "longpoll",
                       "op": [ "subscribeevent" ] }]
                 }
 },
 "id": "Arduino:198:023:042:025",
 "forms": []
 }
```

It is worth noting that the capability models TDS of both automation devices ADV-1, ADV-2 and the on-device applications may be aligned with each other. The interfaces of implemented artifacts in an automation device ADV may be exposed via the capability model TDS. The artifacts may also retrieve relevant information via the capability model TDS. These are reflected in their semantic descriptions.

Eventually all IoT components are represented in a well-founded machine-interpretable format and ready for integration into the semantic repository KGR, enabling effective discovery, automated transformations and validation.

The embodiments not only allow to manage a single on-device application on a single device but enable a construct of new IoT applications by discovering and configuring the semantic knowledge stored in the semantic repository KGR. Some semantic tools may be used to automatically validate whether an automation device ADV meets requirements to run a particular artifact, e.g., in terms of available sensor data, available resources etc..

The artifacts may be instantiated from the orchestrated information and may be deployed to desired automation devices ADV. This concept significantly speeds up an engineering of IoT solutions, where new functionalities may be created by parsing existing semantic information instead of developing embedded software from scratch. By leveraging the proposed framework, mass-management of on-device applications in industrial IoT is enabled.

A possible use of semantic models for neural networks is described below. After introducing semantic artifacts and capability models TDS for an exemplary use case, the focus is now on a description how hosted semantic information may be organized and how existing components may be discovered in order to create new artifacts. This is shown in two example queries.

It is assumed that a neural network is to be deployed with the purpose of monitoring a conveyor belt based on the vibration data. Using semantic discovery, there is no need to redesign a neural network or train a neural network from scratch. Instead, the semantic repository KGR is queried for discovering available neural network models capable of accomplishing the desired task. Aside from available neural network models, minimum memory requirements for executing the model may need to be considered. An exemplary query along with a corresponding result is shown below.

```
 Query 1:
  SELECT ?neuralNetwork ?memory ?unit
  WHERE {
         ?neuralNetwork a nnet:NeuralNetwork ;
            ssn:hasInput ?input ;
            ssn:hasOutput ?output ;
            s3n:hasProcedureFeature ?x .
            ?x ssn-system:inCondition ?cond .
         ?cond a s3n:Memory ;
            schema:minValue ?memory ;
            schema:unitCode ?unit .
          ?input rdf:type :VibrationMeasurement ;
               rdf:type nnet:NetworkInput .
          ?output rdf:type :ConveyorBeltState ;
               rdf:type nnet:NetworkOutput .
   }
  Result:
         neuralNetwork: ClogNet_1; memory: 20; unit: om:kilobyte.
```

A next task may be a determination, which automation devices ADV have a vibration sensor and, at the same time, are able to meet the requirements of the necessary RAM memory. For demonstration purposes, it is assumed that a temperature sensor is also required. An example complete query may be formed as follows:

```
 Query 2:
  SELECT ?multiSensor ?memory
  WHERE {
         ?multiSensor a s3n:SmartSensor ;
                   ssn:hasSubSystem ?system_1 ;
                   ssn:hasSubSystem ?system_2 ;
                   ssn:hasSubSystem ?system_3 .
         ?system_1 rdf:type demo:VibrationSensor .
         ?system_2 rdf:type demo:TemperatureSensor .
         ?system_3 rdf:type s3n:MicroController ;
                   s3n:hasSystemCapability ?x .
         ?x ssn-system:hasSystemProperty ?cond .
         ?cond a s3n:Memory ;
               schema:value ?memory ;
               schema:unitCode om:kilobyte .
         FILTER (?memory >= 20)
   }
  Result:
         multiSensor: Arduino_Sense_BLE; memory: 89,
         multiSensor: SSI-Web_1; memory: 54.
```

Using the proposed framework, it is easy to develop a new IIoT application with the proposed framework. Users and machines may efficiently discover information and filter results according to various requirements.

The proposed embodiments further enable:
- Semantic description for Neural Network-based applications in an automation device;
- Transparent machine-interpretable semantic information reused for different purposes, e.g., for representing a Neural Networks and for creating a semantic description of a device that hosts the network;
- Semantic discovery of a Neural Networks relevant for a particular task;
- Automated proving whether hardware characteristics and computation capabilities of an automation device meet requirements of a Neural Network;
- Validated configuration and deployment of a Neural Network in an automation device;
- Integration of Semantic description for Neural Networks with other knowledge artifacts (digital tweens, standardized semantic models etc.) in a Knowledge Graph;
- Semantic-based management of Neural Network(on-device) applications across different architecture levels (field, edge, cloud), and enablement of transparent and interoperable IIoT ecosystem as whole.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A method for amending or adding machine learning capabilities to an automation device in an automation system, the method including the steps of:
1) providing a capability model (TDS) of the automation device (ADV), the capability model (TDS) semantically representing device capabilities of the automation device (ADV) ;
2) providing at least one machine learning model (SMD) for semantically representing one or more machine learning functionalities and including at least one semantic model of a neural network;
3) deploying the machine learning model (SMD) within the automation device (ADV);
4) interpreting a semantic part of the machine learning model (SMD) by a semantic reasoner and matching requirements of the machine learning model (SMD) with device capabilities inferred by the capability model (TDS); and;
5) executing the machine learning functionalities on the automation device (ADV).

2. The method according to claim 1, wherein the capability model (TDS) is at least partially amended or updated by contents of the machine learning model (SMD).

3. The method according to one of the preceding claims, wherein the machine learning model (SMD) is used for discovery of a neural network model.

4. The method according to one of the preceding claims, wherein at least one of the capability model (TDS) and the machine learning model (SMD) are uploaded to a semantic repository (KGR) of the automation system.

5. The method according to claim 4, wherein the semantic repository (KGR) of the automation system includes a knowledge graph being a central or decentral data base for hosting knowledge artefacts, in particular knowledge artefacts known as digital twins.

6. The method according to one of the preceding claims, wherein a matchmaking of the capability model (TDS) and the machine learning model (SMD) is performed in order to semantically match capabilities of the automation device (ADV) with functional requirements of the automation system.

7. The method according to one of the preceding claims, wherein the provision of the machine learning model (SMD) is preceded by a semantic based discovery of relevant resources offered by a one or more automation devices (ADV).

8. The method according to one of the preceding claims, wherein the semantic model of the neural network is defined as a neural network class related to algorithms, said neural network class including at least one semantic specification of one or more hidden or unhidden layers of a neural network.

9. The method according to claim 8, wherein at least one of said layers of the neural network class is assigned to an interface class or subclass being capable of interfacing classes or subclasses of other semantic models.

10. The method according to one of the preceding claims, wherein the semantic model of the neural network includes a multiplicity of weighted datasets related to a neuron, wherein at least one of said weighted datasets is assigned to a weight variable.
